# EUROPÄISCHE PATENTSCHRIFT

(11) **EP 3 022 836 B1**
(45) Veröffentlichungstag und Bekanntmachung des Hinweises auf die Patenterteilung: **07.06.2017**
(21) Anmeldenummer: 14732204.4
(22) Anmeldetag: 24.06.2014
(51) Int. Cl.: H02M 1/32, H02M 7/219, H02H 7/125

(54) **ÜBERSPANNUNGSSCHUTZ FÜR AKTIVE GLEICHRICHTER BEI LASTABWURF**
OVERVOLTAGE PROTECTION FOR ACTIVE RECTIFIERS IN THE EVENT OF LOAD SHEDDING
PROTECTION CONTRE LES SURTENSIONS POUR REDRESSEURS ACTIFS EN CAS DE DÉLESTAGE BRUSQUE

(30) Priorität: 15.07.2013 DE 102013213802
(43) Veröffentlichungstag der Anmeldung: 25.05.2016
(73) Patentinhaber: Robert Bosch GmbH, 70442 Stuttgart (DE)
(72) Erfinder: OTTE, Christopher, 72762 Reutlingen (DE); MEHRINGER, Paul, 70569 Stuttgart (DE)
(86) Internationale Anmeldenummer: PCT/EP2014/063230
(87) Internationale Veröffentlichungsnummer: WO 2015/007467

(56) Entgegenhaltungen:
- EP-A2- 0 777 309
- DE-A1- 19 835 316
- US-A1- 2012 007 568

## Beschreibung

Die vorliegende Erfindung betrifft einen aktiven Brückengleichrichter mit Mitteln zum Schutz vor Überspannungen bei Lastabwurf, ein Kraftfahrzeugbordnetz mit einem derartigen Brückengleichrichter, ein zugehöriges Betriebsverfahren und Mittel zur Implementierung dieses Betriebsverfahrens.

### Stand der Technik

Zur Speisung von Gleichstromsystemen aus Drehstromsystemen können Gleichrichter unterschiedlicher Bauart eingesetzt werden. In Kraftfahrzeugbordnetzen werden in Entsprechung zu den dort üblicherweise verbauten Drehstromgeneratoren häufig Brückengleichrichter in sechspulsiger Ausführung verwendet. Die Erfindung eignet sich jedoch in gleicher Weise für Brückengleichrichter für andere Phasenzahlen, z.B. für fünfphasige Generatoren.

Ein kritischer Fehlerfall bei Brückengleichrichtern ist der Lastabwurf (engl. Load Dump). Dieser tritt dann auf, wenn sich bei hoch erregtem Generator und einem entsprechend hohen abgegebenen Strom die Last am Generator bzw. dem damit verbundenen Brückengleichrichter (z.B. durch Abschalten von Verbrauchern) schlagartig verringert und dies nicht durch kapazitiv wirkende Elemente im Gleichspannungsnetz (z.B. die Batterie im Kraftfahrzeugbordnetz) abgefangen werden kann. Hierbei könnte durch den Generator bzw. den damit verbundenen Brückengleichrichter im Extremfall bis zu einer Dauer von ca. 300 bis 500 ms weiter Energie ins Kraftfahrzeugbordnetz geliefert werden. Diese muss im Brückengleichrichter abgefangen werden können, um elektrische Komponenten im Kraftfahrzeugbordnetz vor Überspannungsschäden zu schützen. Dies erfolgt bei passiven Brückengleichrichtern i.d.R. durch die dort verbauten Gleichrichterdioden, in denen die überschüssige Energie in Wärme umgesetzt werden kann.

Wie beispielsweise in der DE 10 2009 046 955 A1 erläutert, ist jedoch in Kraftfahrzeugen der Einsatz von aktiven Brückengleichrichtern wünschenswert, unter anderem deshalb, weil diese im Gegensatz zu passiven bzw. ungesteuerten Brückengleichrichtern geringere Verlustleistungen aufweisen. Derzeit erhältliche ansteuerbare bzw. aktive Schaltelemente für derartige aktive Brückengleichrichter, beispielsweise MOS-Feldeffekttransistoren, könnten jedoch Überspannungen nicht wie Dioden abbauen. Daher sind in aktiven Brückengleichrichtern zusätzliche Schutzstrategien erforderlich.

Bei einem Lastabwurf können beispielsweise die Generatorphasen durch Leitendschalten aller Schaltelemente des oberen oder unteren Gleichrichterzweigs kurzzeitig kurzgeschlossen werden, wie beispielsweise in der DE 198 35 316 A1 offenbart und in der DE 10 2009 046 955 A1 diskutiert. Dies erfolgt insbesondere auf Grundlage einer Auswertung der an den Gleichspannungsanschlüssen des aktiven Brückengleichrichters anliegenden Ausgangsspannung. Überschreitet diese einen vorgegebenen oberen Schwellwert, wird ein entsprechender Kurzschluss eingeleitet und die Ausgangsspannung sinkt. Unterschreitet die Ausgangsspannung dadurch einen vorgegebenen unteren Schwellwert, wird der Kurzschluss wieder aufgehoben. Die Ausgangsspannung steigt erneut an. Es handelt sich damit um ein typisches Hystereseverhalten. Die Ausgangsspannung pendelt daher bei einem Lastabwurf im Wesentlichen zwischen dem oberen und dem unteren Schwellwert, bis sich die Spannungsregelung an die neue Situation angepasst und das Erregerfeld des Generators entsprechend reduziert hat.

Probleme können sich hier in sogenannten dezentral aufgebauten aktiven Brückengleichrichtern ergeben, bei denen die einzelnen Halbbrücken jeweils eigenständige Ansteuerschaltungen aufweisen, die jeweils individuell die Ausgangsspannung erfassen. Da hierbei gewisse Toleranzen unvermeidlich sind, kann es zu einem unterschiedlichen Schaltverhalten in den einzelnen Halbbrücken kommen, wie unten erläutert. Infolgedessen können einzelne Schaltelemente im aktiven Brückengleichrichter deutlich überlastet werden, was zu thermischer Zerstörung der entsprechenden Schaltelemente und einem Ausfall führen kann.

Es besteht daher der Bedarf nach verbesserten Schutzstrategien für aktive Brückengleichrichter bei Lastabwurf.

### Offenbarung der Erfindung

Vor diesem Hintergrund schlägt die vorliegende Erfindung einen aktiven Brückengleichrichter mit Mitteln zum Schutz vor Überspannungen bei Lastabwurf, ein Kraftfahrzeugbordnetz mit einem derartigen Brückengleichrichter, ein zugehöriges Betriebsverfahren und Mittel zur Implementierung dieses Betriebsverfahrens mit den Merkmalen der unabhängigen Patentansprüche vor.

### Vorteile der Erfindung

Die vorliegende Erfindung betrifft, wie erwähnt, den Betrieb eines aktiven Brückengleichrichters bei Lastabwurf. Wie erläutert, kann ein derartiger Betrieb umfassen, die Generatorphasen bzw. die diesen entsprechenden Wechselspannungsanschlüsse des aktiven Brückengleichrichters bei Überschreiten eines oberen Schwellwerts durch gleichzeitiges Ansteuern (und damit gleichzeitiges Leitendschalten) aller ansteuerbaren bzw. aktiven Schaltelemente eines Gleichrichterzweigs leitend miteinander zu verbinden (kurzzuschließen) und entsprechende Kurzschlüsse bei Unterschreiten eines unteren Schwellwerts gleichzeitig wieder aufzuheben. Auch in den erwähnten, dezentral aufgebauten aktiven Brückengleichrichtern, bei denen die einzelnen Halbbrücken jeweils eigenständige Ansteuerschaltungen aufweisen, die jeweils individuell die an den Gleichspannungsanschlüssen des aktiven Brückengleichrichters anliegende Ausgangsspannung erfassen, wird ein derartiger Betrieb angestrebt, im Stand der Technik jedoch aufgrund der eingangs erläuterten Toleranzen bei der Spannungserkennung und/oder nachgeordneten Elementen der Ansteuerschaltungen nicht immer erreicht. Die erfindungsgemäßen Maßnahmen ermöglichen hingegen in besonders vorteilhafter Weise einen derartigen Betrieb.

Aufgrund der erwähnten Toleranzen kann es dazu kommen, dass die Schwellwerte, beispielsweise durch Abweichungen zwischen den Vergleichsschaltungen, unterschiedlich ausfallen.

Als besonders kritisch erweist sich der Fall, wenn die unteren Schwellwerte unterschiedlich sind. Weil die Ansteuerschaltungen aller anderen Halbbrücken den normalen Betrieb vor der Ansteuerschaltung mit dem effektiv niedrigsten unteren Schwellwert wieder aufnehmen, steigt die Ausgangsspannung wieder an. Es kann daher dazu kommen, dass die Ansteuerschaltung mit dem effektiv niedrigsten unteren Schwellwert niemals eine Ausgangsspannung unterhalb dieses effektiv niedrigsten unteren Schwellwerts erfasst. Das entsprechend angesteuerte Schaltelement bleibt damit dauerhaft leitend geschaltet.

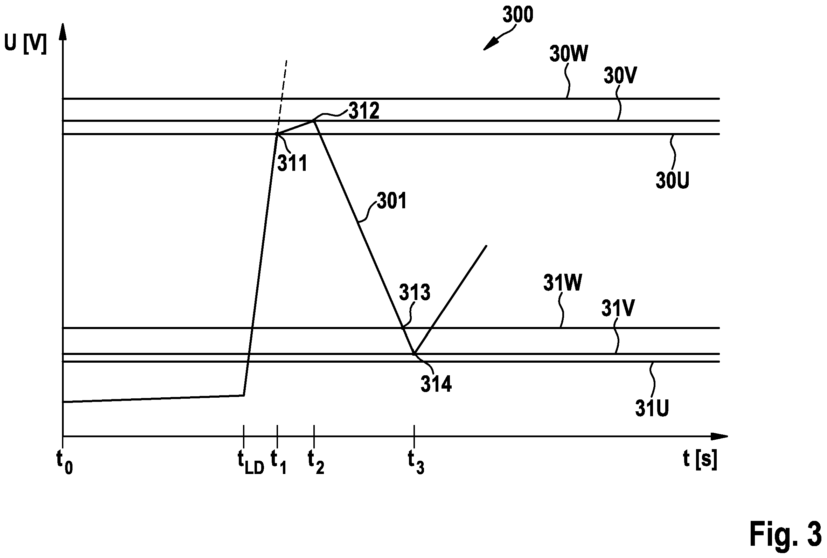

Unter Umständen nehmen also einzelne Phasen die normale Gleichrichtung wieder auf, während andere dauerhaft im Kurzschluss verharren. Dieses Verhalten führt zu einer Asymmetrie der sich ergebenden Phasenströme, wie in den unten erläuterten Figuren 3 bis 5 veranschaulicht. Aufgrund dieser können einzelne Schaltelemente im Gleichrichter deutlich überlastet werden, was zu thermischer Zerstörung der entsprechenden Schaltelemente führen kann. Ein frühzeitiger Ausfall des aktiven Brückengleichrichters oder eine nicht ausreichende Begrenzung der durch den Lastabwurf bewirkten Überspannungen ist damit möglich.

Ein aktiver Brückengleichrichter weist, wie allgemein bekannt, Halbbrücken auf, die mit ihren jeweiligen Schaltelementen einen oberen und einen unteren bzw. Highside- und Lowside-Gleichrichterzweig definieren. Mittels der im oberen bzw. Highside-Gleichrichterzweig angeordneten Schaltelemente kann jeweils eine Verbindung eines oder mehrerer Wechselspannungsanschlüsse mit einem positiven Gleichspannungsanschluss und mittels der im unteren bzw. Lowside-Gleichrichterzweig angeordneten Schaltelemente eine Verbindung eines oder mehrerer Wechselspannungsanschlüsse mit einem negativen Gleichspannungsanschluss hergestellt werden. Jede Halbbrücke weist also zwei zwischen den zwei Gleichspannungsanschlüssen in Reihe geschaltete und ansteuerbare Schaltelemente auf, zwischen denen jeweils einer der Wechselspannungsanschlüsse angeschlossen ist.

Mittels der Wechselspannungsanschlüsse ist der aktive Brückengleichrichter mit einer entsprechenden Anzahl an Generatorphasen verbunden, die Gleichspannungsanschlüsse versorgen ein Gleichspannungsbordnetz. Der negative Gleichspannungsanschluss kann insbesondere auf Masse liegen. An den Gleichspannungsanschlüssen liegt beim gleichrichtenden Betrieb des aktiven Brückengleichrichters eine Ausgangsspannung an, die der Bordnetzspannung eines angeschlossenen Bordnetzes entsprechen kann. Es versteht sich, dass entsprechende aktive Brückengleichrichter auch wechselrichtend betrieben werden können, beispielsweise in Hybridfahrzeugen zur Kommutierung eines Elektromotors. Derartige Betriebsphasen werden hier nicht betrachtet. Jedoch versteht sich, dass, wenn im Rahmen dieser Anmeldung von einem Generator die Rede ist, es sich hierbei auch um eine sowohl generatorisch als auch motorisch betreibbare elektrische Maschine handeln kann. Entsprechendes gilt auch für den aktiven Gleichrichter, der in entsprechenden Betriebsphasen zur Kommutierung auch wechselrichtend betreibbar sein kann.

Die Erfindung betrifft dabei, wie zuvor erwähnt, einen sogenannten dezentralen Brückengleichrichter, bei dem jede Halbbrücke eine Ansteuerschaltung umfasst, die dafür eingerichtet ist, eine zwischen den zwei Gleichspannungsanschlüssen anliegende Ausgangsspannung zu erfassen. Diese ist ferner dazu eingerichtet, ein erstes Schaltelement der zwei Schaltelemente der jeweiligen Halbbrücke durch Ansteuerung mit einem ersten Ansteuersignal leitend zu schalten, bis die Ausgangsspannung einen unteren Schwellwert unterschreitet, nachdem diese zuvor einen oberen Schwellwert überschritten hat, und dieses durch Ansteuerung mit einem zweiten Ansteuersignal getaktet anzusteuern, bis die Ausgangsspannung den oberen Schwellwert überschreitet, nachdem diese zuvor den unteren Schwellwert unterschritten hat.

Das erste Schaltelement ist das Schaltelement, das zur Einleitung bzw. Aufhebung eines entsprechenden Phasenkurzschlusses vorgesehen ist. Das jeweils andere Schaltelement wird im Rahmen dieser Anmeldung als zweites Schaltelement bezeichnet. Die Erfindung wird nachfolgend überwiegend unter Bezugnahme auf die Ansteuerung eines ersten Schaltelements im unteren bzw. LowsideGleichrichterzweig mit dem ersten Ansteuersignal beschrieben, kann jedoch in gleicher Weise für eine Ansteuerung eines entsprechenden ersten Schaltelements in einem oberen bzw. Highside-Gleichrichterzweig eingesetzt werden.

Das erste Ansteuersignal kommt damit dann zum Einsatz, wenn ein Lastabwurf erkannt wird. Diese Erkennung erfolgt durch einen Schwellwertvergleich in der Ansteuerschaltung. Bei dem ersten Ansteuersignal handelt es sich vorzugsweise um ein Dauersignal, das bewirkt, dass das erste Schaltelement dauerhaft in einen leitenden Zustand versetzt wird, also eine leitende Verbindung zwischen dem jeweils mit der Halbbrücke verbundenen Wechselspannungsanschluss und einem der zwei Gleichspannungsanschlüsse herstellt, so lange ein entsprechendes erstes Ansteuersignal anliegt.

Bei dem zweiten Ansteuersignal handelt es sich insbesondere um ein Ansteuersignal, das zur Ansteuerung eines entsprechenden Brückengleichrichters im normalen Gleichrichterbetrieb verwendet wird. Dieses Ansteuersignal ist somit durch Pulsweitenmodulation getaktet. Es kann optional auch von einer übergeordneten Steuereinheit bereitgestellt werden, wobei die jeweilige Ansteuerschaltung dafür eingerichtet ist, das durch die übergeordnete Steuereinheit bereitgestellte Ansteuersignal an das jeweilige erste Schaltelement weiterzuleiten.

Erfindungsgemäß wird jede Ansteuerschaltung mit Schwellwertmitteln ausgestattet, die dafür eingerichtet sind, eine Veränderung des unteren und/oder des oberen Schwellwerts zu bewirken, nachdem die Ausgangsspannung zuvor den oberen Schwellwert überschreitet oder überschritten hat. Die Schwellwertmittel können als analoge oder digitale Schwellwertmittel ausgebildet sein.

Wie erläutert, besteht ein typisches Problem bei der Verwendung von halbbrückenindividuellen Ansteuerschaltungen in dezentralen Gleichrichtern darin, dass es dazu kommen kann, dass die Ansteuerschaltung mit dem effektiv niedrigsten unteren Schwellwert niemals eine Ausgangsspannung unterhalb dieses Schwellwerts erfasst. Das entsprechend angesteuerte Schaltelement bliebe damit ohne die erfindungsgemäßen Maßnahmen dauerhaft leitend geschaltet.

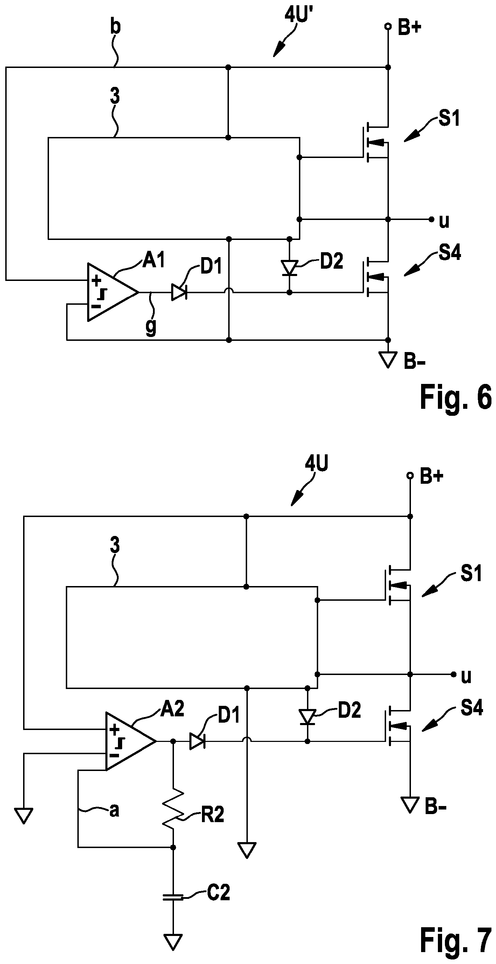

Die Erfindung erlaubt es hingegen, in solchen Fällen eine Veränderung des unteren und/oder des oberen Schwellwerts zu bewirken. Hierbei kann beispielsweise vorgesehen sein, nach dem Leitendschalten des jeweiligen Schaltelements den unteren Schwellwert sukzessive (d.h. beispielsweise schrittweise oder kontinuierlich) anzuheben. Dies kann beispielsweise mittels einer Schaltung, wie sie unten unter Bezugnahme auf die Figur 7 erläutert ist, erfolgen. Durch diese Maßnahmen kann erreicht werden, dass zumindest in einem der nachfolgenden Zyklen der Einleitung und Aufhebung des Phasenkurzschlusses der untere Schwellwert auch dieser Ansteuerschaltung erreicht (unterschritten) wird, so dass auch dieses wieder in den normalen Betrieb übergehen kann.

Um die Belastungen trotz unterschiedlicher oberer und unterer Schwellwerte gleichmäßig auf alle Phasen zu verteilen, kann auch nach dem Überschreiten des oberen Schwellwerts in einer Ansteuerschaltung dieser obere Schwellwert, beispielsweise um ein definiertes Inkrement, nach oben gesetzt werden. Wird innerhalb eines vorgegebenen Zeitfensters (Filterzeit) erneut ein Überschreiten des oberen Schwellwerts erkannt, kann dieser erneut, beispielsweise wieder um ein Inkrement, erhöht und ansonsten entsprechend reduziert werden. Im eingeschwungenen Zustand erhöhen und reduzieren sich damit die oberen Schwellwerte abwechselnd. Die jeweiligen Schaltelemente werden also abwechselnd leitend geschaltet und nicht leitend geschaltet. Die effektiven oberen Schwellwerte liegen damit in allen Phasen in einem engen Bereich, der beispielsweise durch die Größe des Inkrementalwerts für den oberen Schwellwert vorgegeben ist.

Die soeben erläuterten Maßnahmen betreffen selbstverständlich auch Maßnahmen bezüglich des unteren Schwellwerts, der insbesondere synchron zu dem oberen Schwellwert erhöht bzw. verringert werden kann.

Eine besonders vorteilhafte Ausgestaltung des erfindungsgemäßen Verfahrens umfasst die Verwendung von Totzeiten in den phasenindividuellen Ansteuerschaltungen. Eine derartige Totzeit bewirkt, dass die jeweilige Ansteuerschaltung nicht sofort das Ansteuersignal an das hierfür vorgesehene Schaltelement ausgibt, wenn sie ein entsprechendes Ereignis detektiert, sondern erst nach Verstreichen eines vorgegebenen Zeitfensters. Eine entsprechende Totzeit kann dabei sowohl bei Erkennung einer Überschreitung des oberen Schwellwerts als auch bei Unterschreiten des unteren Schwellwerts implementiert sein. Steigt also beispielsweise die Ausgangsspannung an, erkennt die Ansteuerschaltung mit dem (effektiv) niedrigsten oberen Schwellwert als erste eine Überschreitung dieses Schwellwerts. Sie schaltet das hierfür vorgesehene Schaltelement jedoch nicht sofort leitend, sondern "wartet" zunächst das Verstreichen der Totzeit ab. Die Ausgangsspannung steigt daher während der Totzeit weiter an, bis auch die Schaltelemente mit den (effektiv) höheren oberen Schwellwerten (in denen ebenfalls eine entsprechende Totzeit implementiert ist) eine Schwellwertüberschreitung erkennen. Eine Beschaltung aller Schaltelemente ist damit sichergestellt. Entsprechend erkennt das Schaltelement mit dem (effektiv) höchsten unteren Schwellwert bei einem Absinken der Ausgangsspannung dies zuerst. Auch hier steuert sie das hierfür vorgesehene Schaltelement nicht sofort an, sondern "wartet" zunächst das Verstreichen der Totzeit ab. Die Ausgangsspannung sinkt daher während der Totzeit weiter ab, bis auch die Schaltelemente mit den (effektiv) niedrigeren unteren Schwellwerten (in denen ebenfalls eine entsprechende Totzeit implementiert ist) eine Schwellwertunterschreitung erkennen. Die Totzeit kann schaltungstechnisch beispielsweise mittels eines RC-Glieds am Ausgang eines verwendeten Komparators oder mittels eines digitalen Zählers implementiert sein. Sie ist so zu wählen, dass die individuellen Unterschiede (Toleranzen) in den phasenindividuellen Ansteuerschaltungen sicher ausgeglichen werden, aber die Ausgangsspannung keine kritisch hohen oder niedrigen Werte annimmt.

Die im Rahmen dieser Anmeldung erläuterten Merkmale und die dadurch erzielbaren Vorteile betreffen den erfindungsgemäßen aktiven Brückengleichrichter, das erfindungsgemäße Kraftfahrzeugbordnetz mit einem derartigen Brückengleichrichter, das erfindungsgemäße Betriebsverfahren und die erfindungsgemäßen Mittel zur Implementierung dieses Betriebsverfahrens in gleicher Weise.

Eine erfindungsgemäße Recheneinheit, z.B. ein Steuergerät eines Kraftfahrzeugs oder eine Gleichrichtersteuerung, ist, insbesondere programmtechnisch, dazu eingerichtet, ein erfindungsgemäßes Verfahren durchzuführen.

Auch die Implementierung des Verfahrens in Form von Software ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere Disketten, Festplatten, Flash-Speicher, EEPROMs, CD-ROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

### Kurze Beschreibung der Zeichnungen

Figuren 1A bis 1C zeigen Anordnungen mit aktiven Brückengleichrichtern und deren Funktion in schematischer Darstellung.
Figur 2 zeigt einen Stromverlauf bei einer Ansteuerung eines aktiven Brückengleichrichters bei Lastabwurf.
Figur 3 veranschaulicht einen Spannungsverlauf an einem aktiven Brückengleichrichter gemäß dem Stand der Technik.
Figur 4 zeigt Strom- und Spannungsverläufe an einem aktiven Brückengleichrichter gemäß dem Stand der Technik.
Figur 5 zeigt Strom- und Spannungsverläufe an einem aktiven Brückengleichrichter gemäß einer Ausführungsform der Erfindung.
Figur 6 zeigt eine Ansteuerschaltung gemäß dem Stand der Technik in schematischer Darstellung.
Figur 7 zeigt eine Ansteuerschaltung gemäß einer Ausführungsform der Erfindung in schematischer Darstellung

In den Figuren sind gleiche oder einander entsprechende Elemente mit gleichen Bezugszeichen angegeben. Auf eine wiederholte Erläuterung wird verzichtet.

### Ausführungsform(en) der Erfindung

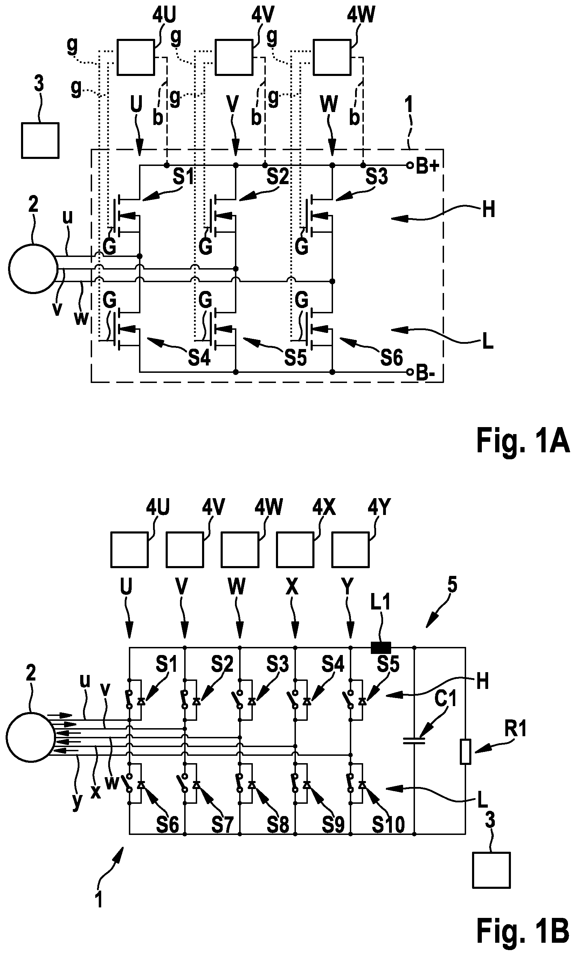

Die Figuren 1A bis 1C zeigen Anordnungen mit aktiven Brückengleichrichtern und deren Funktion in schematischer Darstellung.

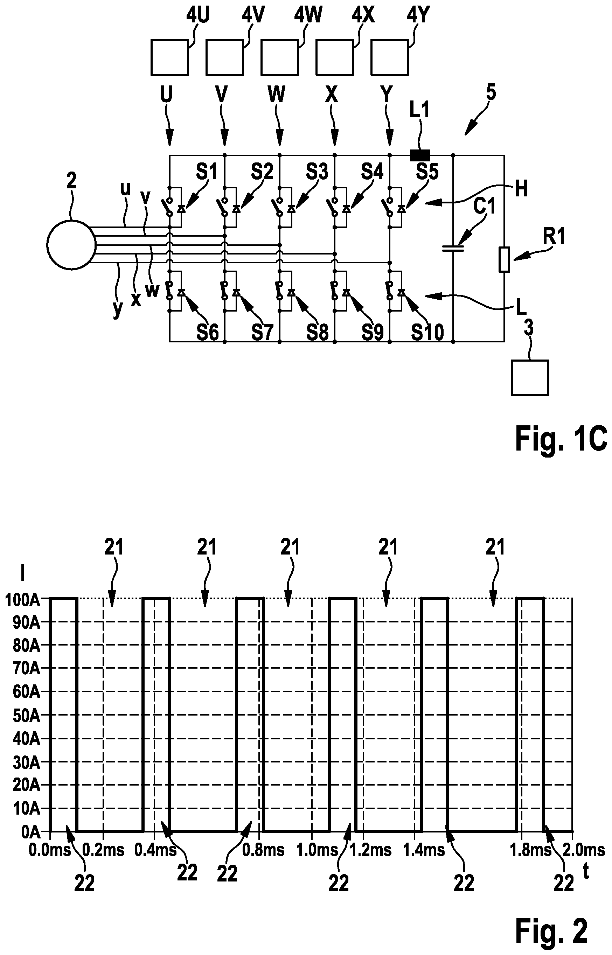

In Figur 1A ist eine Anordnung mit einem aktiven Brückengleichrichter 1 und einem Generator 2 am Beispiel eines dreiphasigen Systems schematisch dargestellt. Der aktive Brückengleichrichter 1 ist in Figur 1A als sechspulsiger aktiver Brückengleichrichter 1 dargestellt, der zur Gleichrichtung eines Drehstroms eines dreiphasigen Generators 2 eingerichtet ist. In gleicher Weise kann jedoch beispielsweise auch ein vier-, fünf-, sechs- oder siebenphasiger Generator 2 und ein entsprechend angepasster aktiver Brückengleichrichter 1 eingesetzt werden. Die Figuren 1B und 1C zeigen beispielsweise eine Anordnung mit einem fünfphasigen Generator 2 und einem entsprechenden aktiven Brückengleichrichter 1.

Der aktive Brückengleichrichter 1 weist drei Halbbrücken U, V und W auf, die über Wechselspannungsanschlüsse u, v und w des aktiven Brückengleichrichters 1 mit entsprechenden Ausgängen des Generators 2, und damit mit den jeweiligen Generatorwicklungen, verbunden sind.

Die Halbbrücken U, V und W sind ausgangsseitig, also über entsprechende Gleichspannungsanschlüsse B+ und B- des aktiven Brückengleichrichters 1, beispielsweise an einen positiven Batteriepol (B+) und einen negativen Batteriepol (B-) und/oder entsprechende Versorgungsleitungen eines Gleichspannungsnetzes, angeschlossen. Der Gleichspannungsanschluss B- kann mit Masse verbunden sein. Die Halbbrücken U, V und W weisen jeweils ansteuerbare bzw. aktive Schaltelemente S1 bis S6 auf, die jeweils in einen oberen Zweig H (Highside) und einen unteren Zweig L (Lowside) der jeweiligen Halbbrücken U, V, und W eingebunden sind.

Einer der Wechselspannungsanschlüsse u, v und w kann nach Maßgabe einer entsprechenden Beschaltung der Schaltelemente S1 bis S6 mit B+ und/oder B-verbunden werden, wobei eine gleichzeitige Ansteuerung jeweils beider Schaltelemente einer Halbbrücke U, V und W (also S1/S4, S2/S5 und S3/S6) im Regelbetrieb zu vermeiden ist, um sogenannte heiße Pfade zwischen den zwei Gleichspannungsanschlüssen B+ und B-zu verhindern.

Zur Ansteuerung des aktiven Brückengleichrichters 1 kann eine Steuereinheit 3 vorgesehen sein. In dem hier dargestellten dezentralen aktiven Brückengleichrichter 1 übernehmen jedoch individuelle Ansteuerschaltungen, hier mit 4U bis 4W bezeichnet, zumindest einen Teil der erforderlichen Schaltaufgaben der jeweiligen Halbbrücken U, V und W. Die Schaltelemente S1 bis S6 können über ihre jeweiligen Gateanschlüsse G über punktiert dargestellte Leitungen g mittels der individuellen Ansteuerschaltungen 4U bis 4W entsprechend einem Ansteuermuster mit einem Ansteuersignal beaufschlagt werden. Das Ansteuermuster kann beispielsweise durch die Steuereinheit 3 vorgeben werden.

Die Schaltelemente einer Halbbrücke U, V und W (also S1/S4, S2/S5 und S3/S6) werden im Normalbetrieb der dargestellten Anordnung derart angesteuert, dass ein an einem entsprechenden Wechselspannungsanschluss u, v und w anliegendes Stromsignal einer damit verbundenen Generatorwicklung des Generators 2 abwechselnd zu einem der beiden Gleichspannungsanschlüsse B+ und B-durchgesteuert wird. Regelhaft erfolgt dies derart, dass bei Anliegen einer positiven Halbwelle an den Wechselspannungsanschlüssen u, v und w das jeweilige Signal zu dem Gleichspannungsanschluss B+, bei Anliegen einer negativen Halbwelle das Signal hingegen zu dem Gleichspannungsanschluss B-durchgesteuert wird. Die Einstellung einer Ausgangsspannung an dem Gleichspannungsanschluss B+ kann auch durch eine entsprechende Taktung erfolgen.

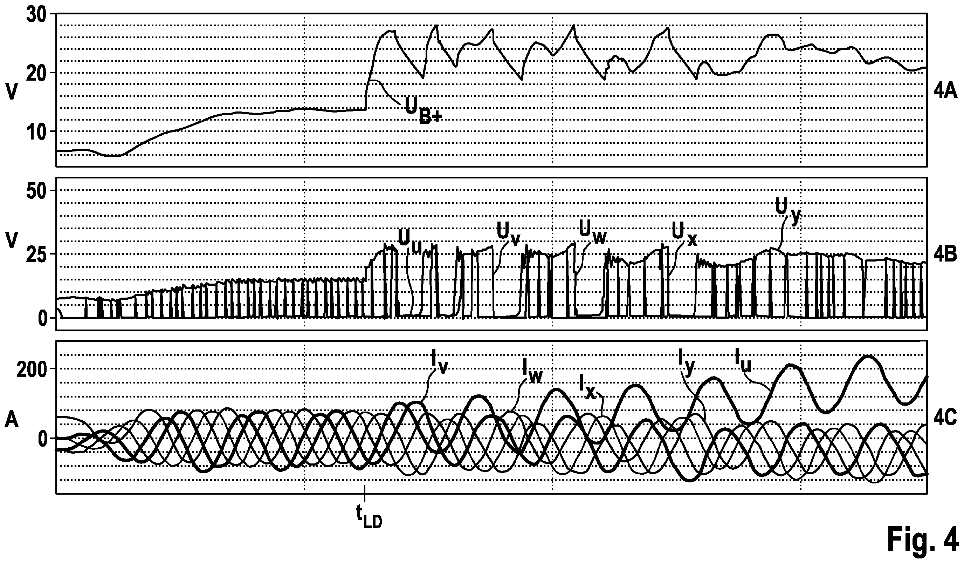

Ein Lastabwurf kann in einer in Figur 1A dargestellten Anordnung auf Grundlage einer zwischen den Gleichspannungsanschlüssen B+ und B- anliegenden Spannung detektiert werden. Hierzu sind im dargestellten Beispiel die individuellen Ansteuerschaltungen 4U bis 4W eingerichtet, wie unten unter Bezugnahme auf die Figur 4A veranschaulicht. Die individuellen Ansteuerschaltungen 4U bis 4W sind dabei über Leitungen b mit zumindest einem gleichspannungsseitigen Ausgang des aktiven Brückengleichrichters 1, hier mit dem mit B+ verbundenen Ausgang, verbunden. Wenn ein definierter Schwellwert der an diesem gleichspannungsseitigen Ausgang des aktiven Brückengleichrichters 1 anliegenden Spannung überschritten wird, kann ein Lastabwurf erkannt werden. Es versteht sich, dass die individuellen Ansteuerschaltungen 4U bis 4W zur Spannungserkennung ferner mit einem Bezugspotential, beispielsweise dem anderen Gleichspannungsanschluss bzw. Masse, verbunden sein können.

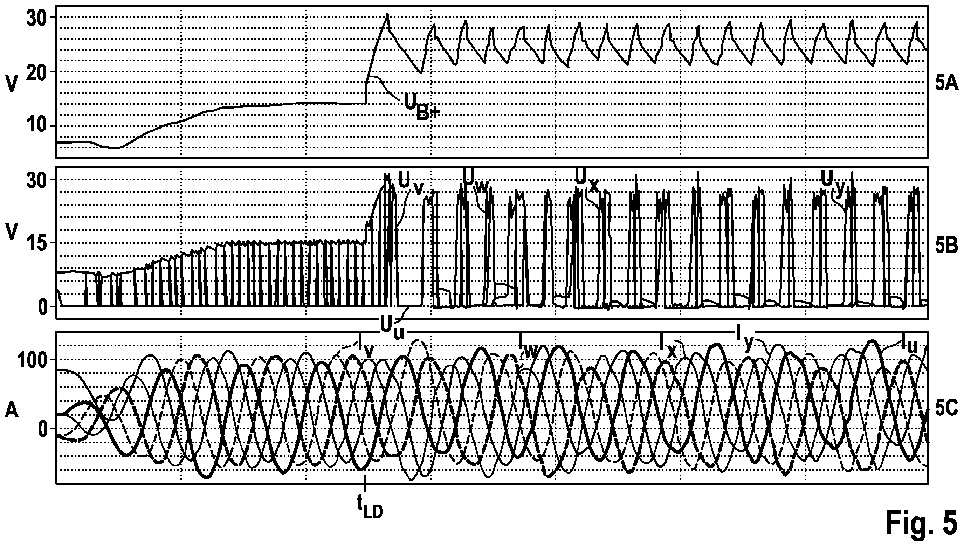

Die Ansteuerung des aktiven Brückengleichrichters 1 bei einem erkannten Lastabwurf kann derart erfolgen, dass die Phasenwicklungen des Generators 2, die jeweils über einen der Wechselspannungsanschlüsse u, v und w mit den Halbbrücken U, V und W des aktiven Brückengleichrichters 1 verbunden sind, zeitlich definiert kurzgeschlossen werden. In der Folge fällt der in das Bordnetz eingespeiste Strom auf null ab. Ein entsprechender Kurzschluss kann durch ein gleichzeitiges Ansteuern und damit Leitendschalten der Schaltelemente S1 bis S3 bzw. S4 bis S6 jeweils eines Gleichrichterzweigs H bzw. L hergestellt werden. Wird der Kurzschluss gelöst, steigt der Strom wieder an. Dieser Ablauf kann in einer Übergangsphase zur Regelung der Ausgangsspannung des Generators 2 verwendet werden bis die normale Regelung über den Generatorregler wieder greift. Wie erwähnt, erfolgt dies bei Verwendung der individuellen Auswerteschaltungen 4U bis 4W gemäß dem Stand der Technik jedoch nicht zuverlässig. Die sich ergebenden negativen Effekte sind unten unter Bezugnahme auf die Figuren 3 und 5 veranschaulicht. Eine Lösung gemäß einer Ausführungsform der Erfindung in Form einer angepassten individuellen Auswerteschaltung 4U ist unten unter Bezugnahme auf die Figur 7 veranschaulicht.

In den Figuren 1B und 1C sind jeweils Anordnungen mit einem fünfphasigen Generator 2 und einem aktiven Brückengleichrichter 1 mit fünf Halbbrücken dargestellt. Die Eingänge sind mit u bis y, die Halbbrücken entsprechend mit U bis Y und die individuellen Ansteuerschaltungen mit 4U bis 4X bezeichnet. Auf eine Darstellung der Leitungen b und g wurde der Übersichtlichkeit halber verzichtet. Die Halbbrücken U bis Y weisen jeweils Schaltelemente S1 bis S10 auf. Die Schaltelemente S1 bis S10 sind als Schalter mit parallel geschalteter Diode veranschaulicht, in der Realität jedoch beispielsweise als MOS-Feldeffekttransistoren wie in Figur 1A ausgebildet. Im Übrigen entsprechen die Anordnungen der Figuren 1B und 1C jenen der Figur 1A.

In einem nachgeschalteten Bordnetz 4 sind eine Bordnetzkapazität C1 und eine resistive Last R1 angeordnet. Die resistive Last entspricht beispielsweise einem Verbraucher in dem Bordnetz 4. Durch die Leitungen in dem Bordnetz 4 ergibt sich eine Leitungsinduktivität L1.

In Figur 1B ist ein Augenblickszustand eines Normalbetriebs der entsprechenden Anordnung dargestellt. Es werde hier angenommen, dass zu diesem Zeitpunkt über die Wechselspannungsanschlüsse u und v ein Strom aus dem Generator in den aktiven Brückengleichrichter fließt, während über die Wechselspannungsanschlüsse w, x und y ein Strom aus dem aktiven Brückengleichrichter in den Generator fließt. Die Schaltelemente S1 und S2 stellen durch eine entsprechende Ansteuerung eine leitende Verbindung der Wechselspannungsanschlüsse u und v mit dem Gleichspannungsanschluss B+ her. Die Schaltelemente S8, S9 und S10 stellen eine leitende Verbindung der Wechselspannungsanschlüsse w, x und y mit dem Gleichspannungsanschluss B- her. An den Wechselspannungsanschlüssen u und v liegt dabei für den entsprechenden Augenblick ein positives Spannungspotential, an den Wechselspannungsanschlüssen w, x und y hingegen ein negatives Spannungspotential an. Der durch den Generator eingespeiste Strom wird bei Lastabwurf zu hoch und beträgt beispielsweise 150 A.

Da im vorliegenden Fall eine Bordnetzkapazität C1 vorgesehen ist, fließt ein Teil des Stroms, beispielsweise 130 A, in diese und lädt diese auf. Der verbleibende Anteil, hier 20 A, fließt in das eigentliche Bordnetz 4 bzw. die resistive Last R1.

Um zu hohe Bordnetzspannungen bei Lastabwurf zu vermeiden, kann periodisch ein Schaltzustand eingestellt werden, wie er in Figur 1C gezeigt ist. Hier sind sämtliche Schaltelemente S6 bis S10 des unteren Gleichrichterzweigs L leitend geschaltet. Alternativ ist es auch möglich, die leitende Verbindung durch die Schaltelemente S1 bis S5 herzustellen. Die Wechselspannungsanschlüsse u bis y und damit die entsprechenden Generatorphasen sind hierdurch leitend miteinander verbunden (kurzgeschlossen). Es fließt kein Strom mehr aus dem Generator 2 in den aktiven Brückengleichrichter 1. Das Bordnetz 4 wird in diesem Schaltzustand ausschließlich aus der Bordnetzkapazität C1 gespeist. Der Schaltzustand der Figur 1C wird so lange eingestellt, bis eine Spannung zwischen den Gleichspannungsanschlüssen B+ und B- wieder unterhalb eines zulässigen Werts liegt. Dann wird wieder der Schaltzustand der Figur 1B eingestellt, bis die Spannung zwischen den Gleichspannungsanschlüssen B+ und B- wieder den zulässigen Wert überschreitet usw.

In Figur 2 ist ein Generatorstromverlauf bei einer derartigen Ansteuerung eines aktiven Brückengleichrichters 1 bei Lastabwurf gemäß dem Stand der Technik dargestellt. Im dargestellten Diagramm ist der Generatorstromverlauf als Strom I in A auf der y-Achse gegen eine Zeit t in ms auf der x-Achse aufgetragen.

Wie bereits im Zusammenhang mit der Figur 1A erläutert, werden im Rahmen einer herkömmlichen Ansteuerung bei Lastabwurf die Schaltelemente S1 bis S3 bzw. S4 bis S6 (bzw. die Schaltelemente S1 bis S5 bzw. S6 bis S10 gemäß den Figuren 1B und 1C) jeweils eines Gleichrichterzweigs H bzw. L während bestimmter Zeiträume 21 gleichzeitig angesteuert, und die Wechselspannungsanschlüsse damit kurzgeschlossen. Damit wird kein Strom in das Bordnetz 4 abgegeben. Während der Zeiträume 22 wird der Kurzschluss hingegen gelöst und ein Strom wie im regulären Gleichrichterbetrieb in das Bordnetz 4 abgegeben.

In Figur 3 ist ein Spannungsverlauf am positiven Gleichspannungsanschluss B+ in einem dreiphasigen aktiven Brückengleichrichter gemäß dem Stand der Technik veranschaulicht, dessen Halbbrücken, wie unter Bezugnahme auf die Figur 1A veranschaulicht, individuelle Ansteuerschaltungen aufweisen. Hierbei reagieren die individuellen Ansteuerschaltungen bzw. entsprechende Auswerteschaltungen in jeder Phase leicht unterschiedlich, was in entsprechend unterschiedlichen Schwellwerten für die Phasen U, V und W resultiert. In gleicher Weise gelten diese Erläuterungen jedoch auch für einen fünfphasigen aktiven Brückengleichrichter, wie er in den Figuren 1B und 1C veranschaulicht ist.

In der Figur 3 sind jeweils obere Schwellwerte der individuellen Ansteuerschaltungen der Halbbrücken U bis W (vgl. Ansteuerschaltungen 4U bis 4W der Figur 1A) eines entsprechenden Gleichrichters mit 30U bis 30W bezeichnet, die unteren Schwellwerte entsprechend mit 31U bis 31W. Es ist ersichtlich, dass der obere und der untere Schwellwert der Ansteuerschaltung der Halbbrücke W, 30W und 31W, deutlich oberhalb der Schwellwerte der Ansteuerschaltung der Halbbrücke V, 30V und 31V, liegt, welcher wiederum oberhalb der Schwellwerte der Ansteuerschaltungen der Halbbrücke U, 30U und 31U, liegt.

In einem Diagramm 300 ist ein Spannungsverlauf 301, wie er beispielsweise an einem Gleichspannungsanschluss eines derartigen aktiven Brückengleichrichters anliegt, beispielsweise dem Gleichspannungsanschluss B+, als Spannungswert U in V auf der Ordinate gegenüber einer Zeit t in s auf der Abszisse aufgetragen.

Zwischen den Zeitpunkten t0 und tLD erfolgt dabei ein regulärer Betrieb, der Spannungswert des Spannungsverlaufs 301 liegt in einem bei einer Gleichrichtung üblichen Bereich und entspricht beispielsweise einer Sollspannung für ein Bordnetz, beispielsweise 12 V. Der entsprechende aktive Brückengleichrichter befindet sich damit im regulären Gleichrichterbetrieb. Zu einem Zeitpunkt tLD erfolgt ein Lastabwurf, beispielsweise durch Abschalten eines Verbrauchers im Bordnetz. Der Spannungswert des Spannungsverlaufs 301 steigt schlagartig an.

An einem Punkt 311 erreicht der Spannungswert des Spannungsverlaufs 301 den oberen Schwellwert 30U der Ansteuerschaltung der Halbbrücke U. Das hierfür vorgesehene Schaltelement dieser Halbbrücke U, beispielsweise das Lowside-Schaltelement (vgl. Schaltelement S4 in Figur 1) wird damit leitend geschaltet. Der Spannungsanstieg flacht sich dadurch ab, erreicht aber noch bei einem Punkt 312 den oberen Schwellwert 30V der Ansteuerschaltung der Halbbrücke V. Auch das hierfür vorgesehene Schaltelement dieser Halbbrücke V (vgl. Schaltelement S5 in Figur 1) wird damit leitend geschaltet. Aufgrund dessen sinkt der Spannungswert des Spannungsverlaufs 310. Der obere Schwellwert 30W der Ansteuerschaltung der Halbbrücke W, 30W, wird damit nicht mehr erreicht, so dass das entsprechende Schaltelement dieser Halbbrücke W (vgl. Schaltelement S6 in Figur 1) in der regulären Ansteuerung, z.B. einer getakteten Ansteuerung, die es auch zwischen den Zeitpunkten t0 und tLD erfährt, verbleibt.

An einem Punkt 313 erreicht der Spannungswert des Spannungsverlaufs 301 den unteren Schwellwert 31W der Ansteuerschaltung der Halbbrücke W. Da diese jedoch zuvor keinen leitenden Zustand des entsprechenden Schaltelements eingeleitet hat, ergibt sich hier keine Änderung.

An einem Punkt 314 erreicht der Spannungswert des Spannungsverlaufs 301 jedoch den unteren Schwellwert 31V der Ansteuerschaltung der Halbbrücke V. Die Ansteuerschaltung der Halbbrücke V hebt nun den dauerhaft leitenden Zustand des entsprechenden Schaltelements auf und kehrt zur regulären Ansteuerung, z.B. einer getakteten Ansteuerung, die auch zwischen den Zeitpunkten t0 und tLD erfolgt, zurück, so dass nur noch das durch die Ansteuerschaltung der Halbbrücke U angesteuerte Schaltelement im dauerhaft leitenden Zustand bleibt.

Da nun jedoch nur noch dieses eine Schaltelement dauerhaft leitend geschaltet ist, erhöht sich der Spannungswert des Spannungsverlaufs 301 wieder. Das durch die Ansteuerschaltung der Halbbrücke U angesteuerte Schaltelement kann daher nicht mehr in die reguläre Ansteuerung kommen, da der untere Schwellwert 31 nicht mehr erreicht wird.

Die sich hieraus ergebenden Effekte auf die Strom- und Spannungsverläufe eines entsprechenden aktiven fünfphasigen Gleichrichters gemäß dem Stand der Technik sind in Figur 4 veranschaulicht. In der Figur 4 sind in einem Teildiagramm 4A ein Spannungsverlauf UB+ an einem gleichspannungsseitigen Ausgang eines aktiven Brückengleichrichters, hier B+, in V, in einem Teildiagramm 4B Verläufe der Phasenspannungen Uu bis Uy in V und in einem Teildiagramm 4C entsprechend die Phasenströme lu bis ly in A auf der Ordinate gegenüber einer gemeinsamen Zeitachse t in s auf der Abszisse dargestellt. Wie ersichtlich, erlaubt auch der Stand der Technik eine Begrenzung der Ausgangsspannung UB+ bei Lastabwurf, es kommt jedoch in der Phase U aufgrund der Tatsache, dass hier das durch die Ansteuerschaltung der Halbbrücke U angesteuerte Schaltelement nicht mehr in die reguläre Ansteuerung kommen kann, da der untere Schwellwert 31 nicht mehr erreicht wird, zu hohen Strömen (Teildiagramm 4D, lu), die das entsprechende Schaltelement stark belasten.

Senkt man hingegen in einer entsprechenden Ansteuerschaltung den unteren Schwellwert sukzessive ab, nachdem der dauerhaft leitende Zustand eingeleitet wurde, kann auch das durch die Ansteuerschaltung der Halbbrücke U angesteuerte Schaltelement wieder in die reguläre Ansteuerung kommen. Dies ist gemäß einer Ausführungsform der Erfindung vorgesehen. Die Effekte sind in Figur 5 gezeigt. Die Darstellung entspricht der Figur 4. Keiner der Phasenströme lu bis ly erreicht hier einen kritischen Wert, die Schaltelemente werden geschont.

Figur 6 zeigt eine Ansteuerschaltung gemäß dem Stand der Technik in schematischer Darstellung. Die Ansteuerschaltung ist insgesamt mit 4U' bezeichnet und kommt beispielsweise in einem aktiven Brückengleichrichter 1 zum Einsatz, wie er in den Figuren 1A bis 1C gezeigt ist. Eine entsprechende Ansteuerschaltung kann für alle Phasen U bis W bzw. Y identisch aufgebaut sein.

In der Ansteuerschaltung 4U ist eine Hystereseschaltung A1 mit ihren Eingängen (+ und -) mit den Gleichspannungsanschlüssen B+ und B- (bzw. Masse) des aktiven Brückengleichrichters 1 verbunden. Die Hystereseschaltung A1 kann damit eine zwischen den Gleichspannungsanschlüssen B+ und B- (bzw. Masse) anliegende Spannung auswerten. Überschreitet diese einen oberen Schwellwert (entsprechend Punkt 311 der Figur 3), liegt am Ausgang der Hystereseschaltung A1 ein Signal an, über das über eine Diode D1 das aktive Schaltelement S2 in den leitenden Zustand versetzt wird.

Nach dem Unterschreiten eines unteren Schwellwerts (falls dieser erreicht wird), liegt am Ausgang der Hystereseschaltung A1 kein Signal mehr an. Über eine Diode D2 wird das aktive Schaltelement S2 nun nur durch ein Signal der Steuereinheit 3 angesteuert. Die Steuereinheit 3 weist ferner Leitungen zum Auswerten der zwischen den Gleichspannungsanschlüssen B+ und B- (bzw. Masse) anliegenden Spannung und der Phasenspannung sowie eine weitere Ansteuerleitung zum Ansteuern des aktiven Schaltelements S1 auf. In einem normalen Gleichrichterbetrieb steuert die Steuereinheit 3 die Schaltelemente S1 und S2 über die entsprechenden Leitungen getaktet an.

Figur 7 zeigt eine Ansteuerschaltung gemäß einer Ausführungsform der Erfindung in schematischer Darstellung. Diese ist mit 4U bezeichnet und verfügt über die wesentlichen Komponenten der Ansteuerschaltung 4U' (vgl. Figur 6). Auch hier kann eine entsprechende Ansteuerschaltung für alle Phasen U bis W bzw. Y identisch aufgebaut sein.

In der Ansteuerschaltung 4U ist jedoch eine gegenüber der Ansteuerschaltung 4U' abweichende Hystereseschaltung A2 vorgesehen, welche ein RC-Glied, umfassend einen Widerstand R2 und einem Kondensator C2, aufweist. Liegt am Ausgang der Hystereseschaltung A2 ein Signal an, wird über den Widerstand R2 der Kondensator C2 aufgeladen. Die Hystereseschaltung A2 ist mittels einer Leitung a dafür eingerichtet, ihre Schwellwerte durch Anlegen einer Spannung an dieser Leitung nach oben zu verschieben. Durch das RC-Glied erfolgt dies sukzessive ab dem Zeitpunkt, zu dem der obere Schwellwert an der Hystereseschaltung A2 überschritten ist. Dadurch wird der untere Schwellwert der Hystereseschaltung A2 kontinuierlich erhöht. Da am Ausgang der Hystereseschaltung A2 immer ein rechteckförmiges Signal anliegt ("High" für Kurzschluss und "Low" für Normalbetrieb), wird das Verschieben der Schwellwerte besonders relevant für Phasen in denen der Kurzschlusszustand sehr lange aufrecht erhalten bleibt. Hierdurch wird ein überlagerter Regelkreis aufgebaut, der dafür sorgt, dass Phasen, wie z.B. die Phase U in Diagramm 4C wieder den unteren Schwellwert erreichen und den Kurzschluss deaktivieren.

## Patentansprüche

1. Brückengleichrichter (1), der eine Anzahl von Wechselspannungsanschlüssen (u - y), zwei Gleichspannungsanschlüsse (B+, B-), sowie eine der Anzahl von Wechselspannungsanschlüssen (u - y) entsprechende Anzahl von Halbbrücken (U - Y) aufweist, wobei
• jede Halbbrücke (U - Y) zwei zwischen den zwei Gleichspannungsanschlüssen (B+, B-) in Reihe geschaltete und ansteuerbare Schaltelemente (S1 - S10) aufweist, zwischen denen jeweils einer der Wechselspannungsanschlüsse (u - y) angeschlossen ist, und
• jede Halbbrücke (U - Y) eine Ansteuerschaltung (4U - 4Y) umfasst, die dafür eingerichtet ist, eine zwischen den zwei Gleichspannungsanschlüssen (B+, B-) anliegende Ausgangsspannung (301) zu erfassen und ein erstes Schaltelement (S1 - S10) der zwei Schaltelemente der jeweiligen Halbbrücke (U - Y)
- durch Ansteuerung mit einem ersten Ansteuersignal leitend zu schalten, bis die Ausgangsspannung (301) einen unteren Schwellwert (31U - 31W) unterschreitet, nachdem diese zuvor einen oberen Schwellwert (30U - 30W) überschritten hat, und
- durch Ansteuerung mit einem zweiten Ansteuersignal getaktet anzusteuern, bis die Ausgangsspannung (301) den oberen Schwellwert (30U - 30W) überschreitet, nachdem diese zuvor den unteren Schwellwert (31U - 31W) unterschritten hat,
**dadurch gekennzeichnet, dass**
jede Ansteuerschaltung (4U - 4Y) Schwellwertmittel (A2) aufweist, die dafür eingerichtet sind, eine Veränderung des unteren und/oder oberen Schwellwerts (30U - 30W, 31U - 31W) derart zu bewirken, dass die Ausgangsspannung den Schwellwert erreichen kann, nachdem die Ausgangsspannung (301) zuvor den oberen Schwellwert (30U - 30W) überschritten hat.

2. Brückengleichrichter (1) nach Anspruch 1, wobei die Schwellwertmittel (A2) dafür eingerichtet sind, den unteren Schwellwert (31U - 31W) ab einem Zeitpunkt sukzessive zu erhöhen, zu dem die Ausgangsspannung (301) den oberen Schwellwert (30U - 30W) überschritten hat.

3. Brückengleichrichter (1) nach Anspruch 2, wobei die Schwellwertmittel (A2) einen als Hystereseschaltung ausgebildeten Komparator umfassen, der einen Schwellwerteingang aufweist, der mit einem RC-Glied verbunden ist, das an einen Ausgang des Komparators angebunden ist.

4. Brückengleichrichter (1) nach Anspruch 1, wobei die Schwellwertmittel (A2) dafür eingerichtet sind, zumindest den oberen Schwellwert (30U - 30W) immer dann zu erhöhen, wenn die Ausgangsspannung (301) den oberen Schwellwert (30U - 30W) innerhalb eines vorgegebenen Zeitfensters zumindest zweimal überschreitet, und immer dann zu verringern, wenn die Ausgangsspannung (301) den oberen Schwellwert (30U - 30W) innerhalb des vorgegebenen Zeitfensters nur einmal überschreitet.

5. Brückengleichrichter (1) nach Anspruch 4, wobei die Schwellwertmittel (A2) dafür eingerichtet sind, zumindest den oberen Schwellwert (30U - 30W) um ein vorgegebenes Inkrement zu erhöhen bzw. zu verringern.

6. Brückengleichrichter (1) nach einem der vorstehenden Ansprüche, der eine Steuereinheit (3) umfasst, die zur Bereitstellung des zweiten Ansteuersignals an die Ansteuerschaltungen (4U - 4Y) und/oder an die ansteuerbaren Schaltelemente (S1 - S10) eingerichtet ist.

7. Kraftfahrzeugbordnetz (4) mit einem Brückengleichrichter (1) nach einem der vorstehenden Ansprüche, wobei die Wechselspannungsanschlüsse (u - y) mit Phasenanschlüssen eines Generators (2) verbunden sind und die zwei Gleichspannungsanschlüsse (B+, B-) dafür eingerichtet sind, zumindest einen Verbraucher (R1) in dem Bordnetz (4) zu speisen.

8. Kraftfahrzeugbordnetz (4) nach Anspruch 7, das ferner wenigstens eine Bordnetzkapazität (C1) und/oder -induktivität (L1) aufweist.

9. Verfahren zum Betreiben eines Brückengleichrichters (1) nach einem der Ansprüche 1 bis 6 und/oder eines Kraftfahrzeugbordnetzes (4) nach Anspruch 7 oder 8, das umfasst, bei einem Lastabwurf jeweils ein erstes Schaltelement (S1 - S10) der zwei Schaltelemente (S1 - S10) zumindest zweier Halbbrücken (U - Y) durch Ansteuerung mittels eines ersten Ansteuersignal leitend zu schalten, bis die Ausgangsspannung (301) einen unteren Schwellwert (31U - 31W) unterschreitet, nachdem diese zuvor einen oberen Schwellwert (30U - 30W) überschritten hat, und durch Ansteuerung mittels eines zweiten Ansteuersignals getaktet anzusteuern wird, bis die Ausgangsspannung (301) den oberen Schwellwert (30U - 30W) überschreitet, nachdem diese zuvor den unteren Schwellwert (31U - 31W) unterschritten hat, und wobei jeweils eine Änderung des unteren und/oder des oberen Schwellwerts (30U - 30W, 31U - 31W) der entsprechenden Ansteuerschaltung (4U - 4Y) bewirkt wird, nachdem die Ausgangsspannung (301) zuvor den oberen Schwellwert (30U - 30W) überschritten hat.

10. Steuereinheit (3) für einen Brückengleichrichter (1) nach einem der Ansprüche 1 bis 6 oder ein Kraftfahrzeugbordnetz nach Anspruch 7 oder 8, die zur Durchführung eines Verfahrens nach Anspruch 9 eingerichtet ist.

11. Computerprogramm, das eine Recheneinheit, insbesondere eine Steuereinheit (3) nach Anspruch 10, dazu veranlasst, ein Verfahren nach Anspruch 9 durchzuführen, wenn es auf der Recheneinheit ausgeführt wird.

## Claims

1. Bridge rectifier (1), which has a number of AC voltage connections (u - y), two DC voltage connections (B+, B-), and a number of half bridges (U - Y) that corresponds to the number of AC voltage connections (u - y), wherein
• each half bridge (U - Y) has two driveable switching elements (S1 - S10) connected in series between the two DC voltage connections (B+, B-), one of the AC voltage connections (u - y) in each case being connected between said switching elements, and
• each half bridge (U - Y) comprises a drive circuit (4U - 4Y), which is configured to detect an output voltage (301) applied between the two DC voltage connections (B+, B-) and
- to switch on a first switching element (S1 - S10) of the two switching elements of the respective half bridge (U - Y) by driving using a first drive signal until the output voltage (301) falls below a lower threshold value (31U - 31W), after said output voltage previously exceeded an upper threshold value (30U - 30W), and
- to drive, in a clocked manner, a first switching element (S1 - S10) of the two switching elements of the respective half bridge (U - Y) by driving using a second drive signal until the output voltage (301) exceeds the upper threshold value (30U - 30W), after said output voltage previously fell below the lower threshold value (31U - 31W),
**characterized in that**
each drive circuit (4U - 4Y) has threshold value means (A2), which are configured to effect a change in the lower and/or upper threshold value (30U - 30W, 31U - 31W) in such a way that the output voltage can reach the threshold value, after the output voltage (301) previously exceeded the upper threshold value (30U - 30W) .

2. Bridge rectifier (1) according to Claim 1, wherein the threshold value means (A2) are configured to gradually increase the lower threshold value (31U - 31W) from a point in time at which the output voltage (301) exceeded the upper threshold value (30U - 30W).

3. Bridge rectifier (1) according to Claim 2, wherein the threshold value means (A2) comprise a comparator embodied as a hysteresis circuit, which has a threshold value input that is connected to an RC element, which is connected to an output of the comparator.

4. Bridge rectifier (1) according to Claim 1, wherein the threshold value means (A2) are configured to increase at least the upper threshold value (30U - 30W) whenever the output voltage (301) exceeds the upper threshold value (30U - 30W) at least twice within a predetermined time window and to decrease said threshold value whenever the output voltage (301) exceeds the upper threshold value (30U - 30W) only once within the predetermined time window.

5. Bridge rectifier (1) according to Claim 4, wherein the threshold value means (A2) are configured to increase and/or to decrease at least the upper threshold value (30U - 30W) by a predetermined increment.

6. Bridge rectifier (1) according to one of the preceding claims, which comprises a control unit (3) that is configured to supply the second drive signal to the drive circuits (4U - 4Y) and/or to the driveable switching elements (S1 - S10).

7. Motor vehicle on-board electrical system (4) having a bridge rectifier (1) according to one of the preceding claims, wherein the AC voltage connections (u - y) are connected to phase connections of a generator (2) and the two DC voltage connections (B+, B-) are configured to feed at least one load (R1) in the on-board electrical system (4).

8. Motor vehicle on-board electrical system (4) according to Claim 7, which further has at least one on-board electrical system capacitance (C1) and/or inductance (L1).

9. Method for operating a bridge rectifier (1) according to one of Claims 1 to 6 and/or a motor vehicle on-board electrical system (4) according to Claim 7 or 8, which, in the case of load shedding, comprises in each case switching on a first switching element (S1 - S10) of the two switching elements (S1 - S10) of at least two half bridges (U - Y) by driving by means of a first drive signal, until the output voltage (301) falls below a lower threshold value (31U - 31W), after said output voltage previously exceeded an upper threshold value (30U - 30W), and is driving, in a clocked manner, a first switching element (S1 - S10) of the two switching elements (S1 - S10) of at least two half bridges (U - Y) by driving by means of a second drive signal, until the output voltage (301) exceeds the upper threshold value (30U - 30W), after said output voltage previously fell below the lower threshold value (31U - 31W), and wherein in each case a change is effected in the lower and/or upper threshold value (30U - 30W, 31U - 31W) of the corresponding drive circuit (4U - 4Y), after the output voltage (301) previously exceeded the upper threshold value (30U - 30W).

10. Control unit (3) for a bridge rectifier (1) according to one of Claims 1 to 6 or a motor vehicle on-board electrical system according to Claim 7 or 8, which is configured to carry out a method according to Claim 9.

11. Computer program, which prompts a computing unit, in particular a control unit (3) according to Claim 10, to carry out a method according to Claim 9 when said program is executed on the computing unit.

## Revendications

1. Redresseur en pont (1), lequel possède une pluralité de bornes de tension alternative (u - y), deux bornes de tension continue (B+, B-) ainsi qu'une pluralité de demi-ponts (U - Y) correspondant à la pluralité de bornes de tension alternative (u - y),
* chaque demi-pont (U - Y) possédant deux éléments de commutation (S1 - S10) branchés en série entre les deux bornes de tension continue (B+, B-) et commandables, entre lesquels est respectivement raccordée l'une des bornes de tension alternative (u - y), et
* chaque demi-pont (U - Y) comprenant un circuit d'excitation (4U - 4Y) qui est conçu pour détecter une tension de sortie (301) appliquée entre les deux bornes de tension continue (B+, B-) et pour commuter un premier élément de commutation (S1 - S10) des deux éléments de commutation du demi-pont (U - Y) respectif
- par excitation avec un premier signal d'excitation pour le rendre passant jusqu'à ce que la tension de sortie (301) devienne inférieure à une valeur de seuil basse (31U - 31W) après que celle-ci soit préalablement devenue supérieure à une valeur de seuil haute (30U - 30W), et
- de manière cyclique par excitation avec un deuxième signal d'excitation jusqu'à ce que la tension de sortie (301) devienne supérieure à la valeur de seuil haute (30U - 30W) après que celle-ci soit préalablement devenue inférieure à la valeur de seuil basse (31U - 31W),
**caractérisé en ce que**
chaque circuit d'excitation (4U - 4Y) possède des moyens de valeur de seuil (A2) qui sont conçus pour provoquer une modification de la valeur de seuil basse et/ou haute (30U - 30W, 31U - 31W) de telle sorte que la tension de sortie peut atteindre la valeur de seuil après que la tension de sortie (301) soit préalablement devenue supérieure à la valeur de seuil haute (30U - 30W) .

2. Redresseur en pont (1) selon la revendication 1, les moyens de valeur de seuil (A2) étant conçus pour augmenter successivement la valeur de seuil basse (31U - 31W) à partir d'un instant auquel la tension de sortie (301) est devenue supérieure à la valeur de seuil haute (30U - 30W).

3. Redresseur en pont (1) selon la revendication 2, les moyens de valeur de seuil (A2) comprenant un comparateur réalisé sous la forme d'un circuit à hystérésis, lequel possède une entrée de valeur de seuil qui est reliée à un réseau RC connecté à une sortie du comparateur.

4. Redresseur en pont (1) selon la revendication 1, les moyens de valeur de seuil (A2) étant conçus pour toujours augmenter au moins la valeur de seuil haute (30U - 30W) lorsque la tension de sortie (301) devient supérieure à la valeur de seuil haute (30U - 30W) au moins deux fois au cours d'un créneau temporel prédéfini, et pour toujours la diminuer lorsque la tension de sortie (301) ne devient qu'une seule fois supérieure à la valeur de seuil haute (30U - 30W) au cours du créneau temporel prédéfini.

5. Redresseur en pont (1) selon la revendication 4, les moyens de valeur de seuil (A2) étant conçus pour augmenter ou diminuer au moins la valeur de seuil haute (30U - 30W) d'un incrément prédéfini.

6. Redresseur en pont (1) selon l'une des revendications précédentes, lequel comprend une unité de commande (3) qui est conçue pour délivrer le deuxième signal d'excitation au circuit d'excitation (4U - 4Y) et/ou aux éléments de commutation (S1 - S10) commandables.

7. Réseau de bord de véhicule automobile (4) comprenant un redresseur en pont (1) selon l'une des revendications précédentes, les bornes de tension alternative (u - y) étant reliées à des bornes de phase d'un alternateur (2) et les deux bornes de tension continue (B+, B-) étant conçues pour alimenter au moins un consommateur (R1) dans le réseau de bord (4).

8. Réseau de bord de véhicule automobile (4) selon la revendication 7, lequel possède en plus au moins un condensateur (C1) et/ou une inductance (L1) de réseau de bord.

9. Procédé pour faire fonctionner un redresseur en pont (1) selon l'une des revendications 1 à 6 et/ou un réseau de bord de véhicule automobile (4) selon la revendication 7 ou 8, qui comprend, lors d'un délestage de charge, la commutation à l'état passant respectivement d'un premier élément de commutation (S1 - S10) des deux éléments de commutation (S1-S10) d'au moins deux demi-ponts (U - Y) par excitation au moyen d'un premier signal d'excitation jusqu'à ce que la tension de sortie (301) devienne inférieure à une valeur de seuil basse (31U - 31W) après que celle-ci soit préalablement devenue supérieure à une valeur de seuil haute (30U - 30W) et, l'excitation cyclique de celui-ci par excitation au moyen d'un deuxième signal d'excitation jusqu'à ce que la tension de sortie (301) devienne supérieure à la valeur de seuil haute (30U - 30W) après que celle-ci soit préalablement devenue inférieure à une valeur de seuil basse (31U - 31W), et une modification de la valeur de seuil basse et/ou haute (30U - 30W, 31U - 31W) du circuit d'excitation (4U - 4Y) correspondant étant respectivement effectuée après que la tension de sortie (301) soit préalablement devenue supérieure à la valeur de seuil haute (30U - 30W).

10. Unité de commande (3) pour un redresseur en pont (1) selon l'une des revendications 1 à 6 ou un réseau de bord de véhicule automobile selon la revendication 7 ou 8, laquelle est conçue pour mettre en oeuvre un procédé selon la revendication 9.

11. Programme informatique qui amène une unité de calcul, notamment une unité de commande (3) selon la revendication 10, à mettre en oeuvre un procédé selon la revendication 9 lorsqu'il est exécuté sur l'unité de calcul.
